# EUROPEAN PATENT SPECIFICATION

(11) **EP 2 030 127 B1**
(45) Date of publication and mention of the grant of the patent: **22.02.2012**
(21) Application number: 06829731.6
(22) Date of filing: 19.12.2006
(51) Int. Cl.: G06F 17/30

(54) **PREDICTIVE DATA SEARCH**
PRÄDIKTIONSDATENSUCHE
RECHERCHE DE DONNEES PREDICTIVES

(30) Priority: 22.06.2006 US 805543 P; 09.11.2006 US 558209
(43) Date of publication of application: 04.03.2009
(73) Proprietor: SONY ERICSSON MOBILE COMMUNICATIONS AB, 221 88 Lund (SE)
(72) Inventor: GULLIKSSON, Johan, S-237 34 Bjärred (SE)
(74) Representative: VALEA AB
(86) International application number: PCT/EP2006/012241
(87) International publication number: WO 2007/147433

(56) References cited:
- US-B1- 6 557 004
- US-B1- 7 007 239
- KARLSON A K ET AL.: "FaThumb: a facet-based interface for mobile search" CONFERENCE ON HUMAN FACTORS IN COMPUTING SYSTEMS, vol. 2, April 2006 (2006-04), pages 711-720, XP002427196 New York, NY, USA

## Description

### TECHNICAL FIELD OF THE INVENTION

The present invention relates to the field of portable devices and particularly portable communication devices comprising searchable data files. More particularly the present invention relates to a method of searching for such data files in a portable device, a portable device adapted to search for such data files as well as a computer program product for performing the method in a portable device.

### DESCRIPTION OF RELATED ART

It is well known to those skilled in the art of portable communication devices that such devices are able to store various types of data files, *e.g*. image-files and audio-files etc. The data files may be produced by the portable communication device itself, *e.g*. by means of a camera or a microphone arranged on the portable device for recording an image or recording a sound. This is well known in to those skilled in the art. In addition, various data files may also be downloaded by means of wire or wireless communication into the portable communication device from other devices. This is also well known in to those skilled in the art.

Typically, most users require that data files stored in a portable communication device can be managed for different purposes, *e.g*. for displaying in the case of image-files or for playing in the case of audio-files etc. Other purposes may *e.g*. be renaming, copying and/or deleting etc.

Typically, managing a plurality of data files requires a search for identifying the file or files to be managed. Generally, in an stationary personal computer (PCs) this is performed under an application program and/or under an operating system such Windows as is well known. Typically this search is fairly efficient due to a comparatively large monitor screen (*e.g*. 15 inches or more) and an enhanced selection function implemented by a computer mouse or similar used in connection with a stationary PC. This enables a user to view a large number of data files displayed by the large monitor screen, and to move fast for an easy selection among the data files by means of the computer mouse or similar.

However, managing a plurality of data files in a portable communication device is more cumbersome. A portable device is typically provided with a comparatively small display (*e.g*. a few inches such as 1, 2 or 3 inches) and it typically has a reduced selection function *e.g.* implemented by means of one or a few keys providing a more or less stepwise movement of a cursor or similar from one file to another. Hence, a user of the portable device is limited to view a small number of files on the comparatively small display and to move fairly slowly and substantially stepwise among the displayed files. The efficiency provided by a large monitor screen and the enhanced selection function provided by a computer mouse or similar enabling a user to move fast and select easily among a large number of displayed data files is consequently lost.

In view of the above it would be beneficial to provide an efficient search procedure for identifying the data file or data files to be managed in a portable communication device. In particular, it would be beneficial to provide a simple and intuitive search procedure.

### SUMMARY OF THE INVENTION

The present invention is directed to solving the problem of providing a user of a portable device with an efficient search procedure for identifying a data file or data files to be managed in a portable device. In particular, the present invention is directed to solving the problem of providing a simple and intuitive search procedure.

One object of the present invention is thus to provide a portable device with an efficient search procedure for identifying a data file or data files to be managed in a portable device. In particular, an object of the present invention is to solving the problem of providing a simple and intuitive search procedure.

This object is achieved according to a first aspect of the present invention directed to a method of searching for at least one data file in a portable device, which portable device is provided with: access to a memory arrangement comprising a plurality of data files, each being provided with a file-information-field having a plurality of symbols; a key arrangement comprising a plurality of keys each representing at least one symbol; a presentation arrangement for presenting results; and a search handling unit for performing the method.

Said method comprises the step of:
- retrieving and presenting at least a part of said file-information-fields in said plurality of data files; and the further steps of:
- proceeding to the first diverging position in the presented part of the file-information-fields;
- obtaining a key input;
- comparing the symbol or symbols represented by the key input and the symbol in said diverging position of said file-information-fields;
- presenting at least a part of the file-information-fields having a symbol that matches a symbol represented by the key input; and
- repeating said further steps until all positions in the presented file-information-fields have been stepped through or until the presented file-information-field correspond to a single file.

A second aspect of the present invention is directed towards a method including the features of the first aspect, wherein said data file is at least one of: an image-file or an audio-file.

A third aspect of the present invention is directed towards a method including the features of the first aspect or the second aspect, wherein said searching for said at least one data file is performed in a plurality of data files each provided with a file-information-field that at least comprises the date on which the data file was created.

A fourth aspect of the present invention is directed towards a method including the features of the first aspect, wherein said key input correspond to a plurality of different symbols, each being at least one of: a numeral or a letter.

A fifth aspect of the present invention is directed towards a method including the features of the first aspect, wherein said first diverging position in the presented part of the file-information-fields is the first position in which the presented part of the file-information-fields comprises different information.

A sixth aspect of the present invention is directed towards a method including the features of the first aspect, wherein said proceeding to the first diverging position in the presented part of the file-information-fields is either performed from left to right or from right to left in the presented part of the file-information-fields, depending on the number of different symbols found in the first diverging position when proceeding from the left or from the right in the presented file-information-fields.

A seventh aspect of the present invention is directed towards a method including the features of the first aspect and comprising the further step of processing the file or files identified, when all positions in the presented file-information-fields have been stepped through or when the presented file-information-field correspond to a single file.

An eight aspect of the present invention is directed towards a method including the features of the seventh aspect, wherein said processing is a displaying of an image comprised by an identified image-file or a sounding of a sound comprised by an identified audio-file.

A ninth aspect of the present invention is directed towards a method including the features of the first aspect, wherein the retrieving of said file-information-fields is performed by accessing a memory arrangement arranged in the portable device.

A tenth aspect of the present invention is directed towards a method including the features of the first aspect, wherein the retrieving of said file-information-fields is performed by accessing a memory arrangement connected to a network.

An eleventh aspect of the present invention is directed towards a method including the features of any of the preceding aspects, wherein said portable device is a phone.

The object mentioned above is also achieved according to a twelfth aspect of the present invention directed to a portable device provided with: access to a memory arrangement comprising a plurality of data files, each being provided with a file-information-field comprising a plurality of symbols; a key arrangement comprising a plurality of keys each representing at least one symbol; a presentation arrangement for operatively presenting results; and a search handling unit for operatively retrieving and presenting at least a part of said file-information-fields in said plurality of data files, and for operatively searching for at least one data file in said plurality of data files by operatively perform the steps of;
- proceeding to the first diverging position in the presented part of the file-information-fields;
- obtaining a key input;
- comparing the symbol or symbols represented by the key input and the symbol in said diverging position of said file-information-fields;
- presenting at least a part of the file-information-fields having a symbol that matches a symbol represented by the key input; and
- repeating the further steps until all positions in the presented file-information-fields have been stepped through or until the presented file-information-field correspond to a single file.

A thirteenth aspect of the present invention is directed towards a portable device including the features of the twelfth aspect, wherein said data file is at least one of: an image-file or an audio-file.

A fourteenth aspect of the present invention is directed towards a portable device including the features of the twelfth or the thirteenth aspect, wherein said plurality of data files each is provided with a file-information-field that at least comprises the date on which the data file was created.

A fifteenth aspect of the present invention is directed towards a portable device including the features of the twelfth or the thirteenth aspect, wherein said key input correspond to a plurality of different symbols, each being at least one of: a numeral or a letter.

A sixteenth aspect of the present invention is directed towards a portable device including the features of the twelfth aspect, wherein said first diverging position in the presented part of the file-information-fields is the first position in which the presented part of the file-information-fields comprises different information.

A seventeenth aspect of the present invention is directed towards a portable device including the features of the twelfth aspect, wherein said search handling unit is arranged to operatively perform said proceeding to the first diverging position in the presented part of the file-information-fields either from left to right or from right to left in the presented part of the file-information-fields, depending on the number of different symbols found in the first diverging position when proceeding from the left or from the right in the presented file-information-fields.

An eighteenth aspect of the present invention is directed towards a portable device including the features of the twelfth aspect, wherein said search handling unit is arranged to operatively initiate a processing of the file or files identified; when all positions in the presented file-information-fields have been stepped through or when the presented file-information-field correspond to a single file.

A nineteenth aspect of the present invention is directed towards a portable device including the features of the twelfth or the thirteenth aspect, wherein said search handling unit is arranged to operatively initiate a processing comprising a displaying of an image comprised by an identified image-file or comprising a sounding of a sound comprised by an identified audio-file.

A twentieth aspect of the present invention is directed towards a portable device including the features of the twelfth aspect, wherein the retrieving of said file-information-fields is performed by accessing a memory arrangement arranged in the portable device.

A twenty-first aspect of the present invention is directed towards a portable device including the features of the twelfth aspect, wherein the retrieving of said file-information-fields is performed by accessing a memory arrangement connected to a network.

A twenty-second aspect of the present invention is directed towards a portable device including the features of any of the twelfth to the twenty-first aspect, wherein said portable device is a phone.

A twenty-third aspect of the present invention is directed towards a computer readable medium, having thereon: computer program code means, to make a portable device execute;
when said program is loaded in a portable device having access to a memory arrangement comprising a plurality of data files, each being provided with a file-information-field comprising a plurality of symbols; a key arrangement comprising a plurality of keys each representing at least one symbol; a presentation arrangement for presenting results; the step of:
- presenting at least a part of said file-information-fields in said plurality of data files to said user; and the further steps of:
- proceeding to the first diverging position in the presented part of the file-information-fields;
- obtaining of a key input;
- comparing of the symbol or symbols represented by the key input and the symbol in said diverging position of said file-information-fields;
- presentation at least a part of the file-information-fields having a symbol that matches a symbol represented by the key input; and
- repeating the further steps until all positions in the presented file-information-fields have been stepped through or until the presented file-information-field correspond to a single file.

A twenty-fourth aspect of the present invention is directed towards a computer program element comprising: computer program code means to make a portable device execute; when said program element is loaded in the portable device having access to: a memory arrangement comprising a plurality of data files, each being provided with a file-information-field comprising a plurality of symbols; a key arrangement comprising a plurality of keys each representing at least one symbol; a presentation arrangement for presenting results;
the step of:
- presenting least a part of the file-information-fields in said plurality of data files; and and the further steps of:
- proceeding to the first diverging position in the presented part of the file-information-fields;
- obtaining a key input;
- comparing the symbol or symbols represented by the key input and the symbol in said diverging position of said file-information-fields;
- presenting at least a part of the file-information-fields having a symbol that matches a symbol represented by the key input; and
- repeating the further steps until all positions in the presented file-information-fields have been stepped through or until the presented file-information-field correspond to a single file.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
- Fig. 1: shows a portable communication device in the form of a cellular phone,
- Fig. 2: shows the phone in fig. 1 connected to a cellular network,
- Fig. 3: shows a block schematic of the relevant parts of the phone in fig. 1,
- Fig. 4: shows a flow chart of a method of performing the method according to a preferred embodiment of the invention, and
- Fig.: 5a-h is a number of figures illustrating an exemplifying method of searching for a data file in a portable device.
- Fig. 6: shows a CD Rom on which program code for executing the method according to the invention is provided.

### DETAILED DESCRIPTION OF EMBODIMENTS

The present invention relates to portable devices comprising searchable data products. In particular, the invention relates to portable *communication* devices comprising searchable data products. However, the invention is by no means limited to communication devices. Rather, it can be applied to any suitable portable device comprising searchable data products, in particularly searchable data files.

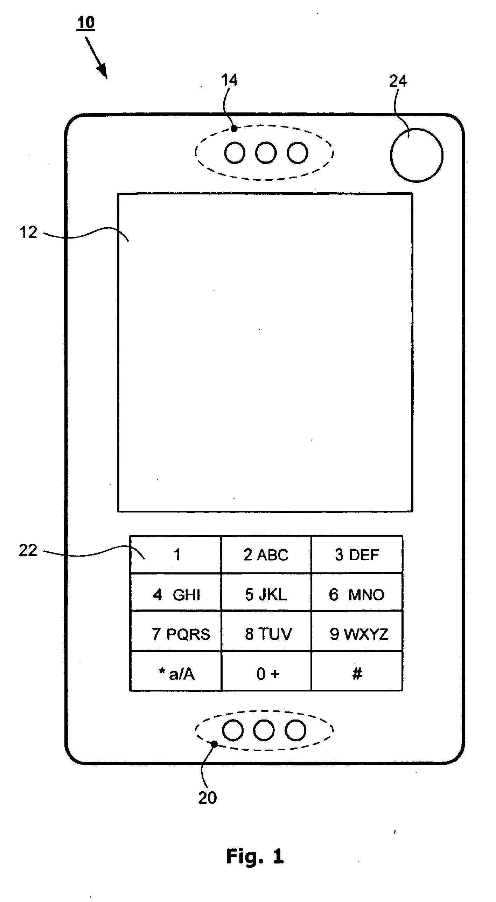

A portable communication device 10 according to a preferred embodiment of the invention is shown in fig. 1. In the preferred embodiment the device is a cellular phone 10 having a display 12 and a keypad 22 including a number of keys. The keypad 22 is used for entering information such as selection of functions and responding to prompts and the display 12 is used for displaying functions and prompts to a user of the phone 10.

The exemplifying keypad in Fig. 1 comprises 3X4 keys, *i.e*. twelve keys. Several keys are capable of representing at least two different symbols as is well known to those skilled in the art of cellular phones.

More particularly:

| Key | Symbol(s) |
|---|---|
| 1 | 1 |
| 2 | 2, A, B, C |
| 3 | 3, D, E, F |
| 4 | 4, G, H, I |
| 5 | 5, J, K, L |
| 6 | 6, M, N, O |
| 7 | 7, P, Q, R, S |
| 8 | 8, T, U, V |
| 9 | W,X,Y,Z |
| 10 | *, a/A |
| 11 | 0, + |
| 12 | # |

It should be emphasised that the keypad 22 may be any suitable keypad, *e.g*. comprising push buttons or touch buttons or similar.

In addition, the phone 10 also includes an antenna, which is used for communication with other users via a network. However the antenna is in-built in the phone and hence not shown in Fig 1. The phone 10 also includes a speaker 14 for presenting sounds to a user and a microphone 20 for sensing the voice from a user. Moreover, the cell phone 10 comprises a camera 24, *e.g*. a Charge-Coupled Device (CCD) for enabling pictures and/or movie shots to be recorded as data files. In particular, as is well known, such an image data file is typically provided with a file-information-field comprising the date when the data file was created, *i.e*. comprising the year, month, day and preferably also the time when the data file was created. This makes it possible to conveniently search for a particular image data file in a catalogue of image data files as will be further discussed later.

Before we proceed it should be emphasised that the cellular phone 10 in Fig. 1 is just one example of a portable device in which the invention can be implemented. The invention can for instance also be used in a PDA (personal digital assistant), a palm top computer, a lap top computer or a smartphone or any other suitable portable device, *e.g*. such as a digital camera.

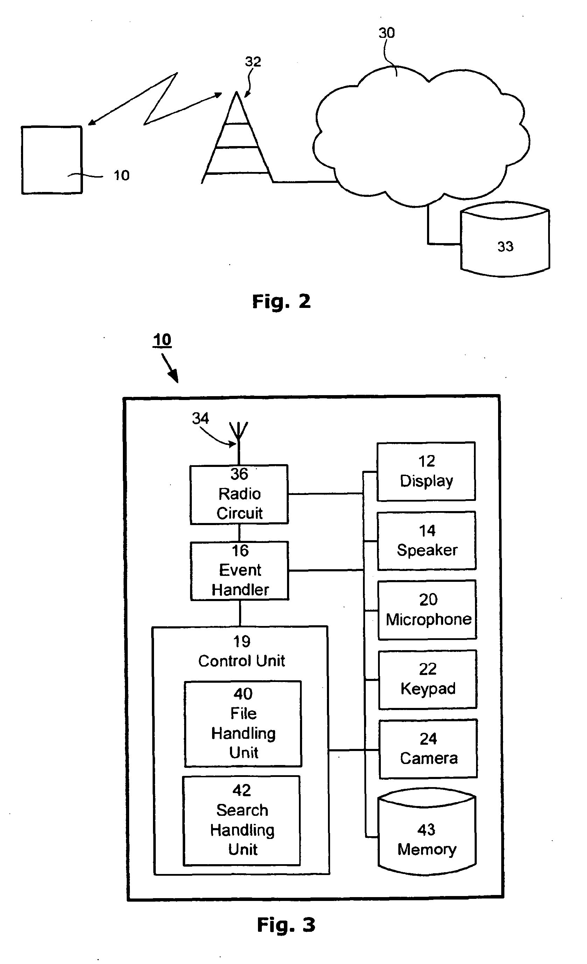

The attention is now directed to Fig. 2 showing the cellular phone 10 connected to a cellular network 30 via a base station 32. The network 30 is typically a GSM or a GPRS network, or any other 2G, 2,5G or 2,75G network. It is of course also possible that the network is a 3G network such as a WCDMA network. However, the network does not have to be a cellular network but can be some type of network, such as Internet, a corporate intranet, a LAN or a wireless LAN. In addition, as can be seen in Fig. 2 an embodiment of the present invention may utilize or comprise a memory arrangement 33 connected to said network 30. The memory arrangement 33 may *e.g.* be a server or similar connected to the Internet which in turn is connected to the network 30. Servers and other suitable memory arrangements being connected to the Internet is well known to those skilled in the art. It is likewise well known that *e.g*. a phone like the cell phone 10 can be arranged to operatively access the Internet and resources such as servers and other memory arrangements connected thereto. This is *e.g*. common and well known in connection with GPRS and WCDMA networks and similar.

Fig. 3 shows part of the interior of the cellular phone 10 that is relevant for the present invention. As previously explained, it is preferred that the phone 10 comprises a display 12, a loudspeaker 14, a microphone 20, a keypad 22 and a camera 24. In addition, the phone 10 is provided with a memory 43 for storing data files, in particularly searchable image data files produced by the camera 24 and provided with a file-information-field comprising the date when the data file was created as previously described above. The memory may be any suitable memory type used in portable devices.

In addition, the phone 10 comprises an antenna 34 connected to a radio circuit 36 for enabling radio communication with the network 30 in fig. 2. The radio circuit 36 is in turn connected to an event handling unit 16 for handling such events as incoming and outgoing communication with external units via the network 30, *e.g.* calls and messages, *e.g*. SMS (Short Message Service) and MMS (Multimedia Messaging Service).

The phone 10 is also provided with a control unit 19 for controlling and supervising the operation of the phone 10. The control unit 19 may be implemented by means of hardware and/or software, and it may be comprised by one or several hardware units and/or software modules, *e.g.* one or several processor units provided with or having access to the software and hardware appropriate for the functions required by the phone 10, as is well known by those skilled in the art.

As can be seen in Fig. 3, it is preferred that the control unit 19 is connected to the display 12, the speaker 14, the event handling unit 16, the microphone 20, the keypad 22, the camera 24, the radio unit 36 and the memory 43. This enables the control unit 19 to control and communicate with these units so as to *e.g*. exchanging information and instructions with the units.

Of particular interest for the exemplifying embodiment now discussed is that the control unit 19 is provided with a file handling unit 40 for managing the data files stored in the memory 43, especially the searchable data files stored therein. Furthermore, the control unit 19 is provided with a search handling unit 42 for searching and identifying a searchable data file as a response to key strokes on the keypad 22. Being a part of the control unit 19 implies that the file handling unit 40 and the search handling unit 42 may be implemented by means of hardware and/or software, and they may be comprised by one or several hardware units and/or software modules, *e.g*. one or several processor units provided with or having access to the software and hardware appropriate for the functions required. In particular, the file handling unit 40 is preferably implemented, by means of an operative system running the control unit 19 of the phone 10 and the search handling unit 42 is preferably implemented by software program running on the control unit under a suitable operative system.

Before we proceed it should be emphasised that in addition to the ones shown in Fig. 3 there may be further parts and units present in the phone 10. The parts and units shown in Fig. 3 may also be connected to more parts and units than illustrated.

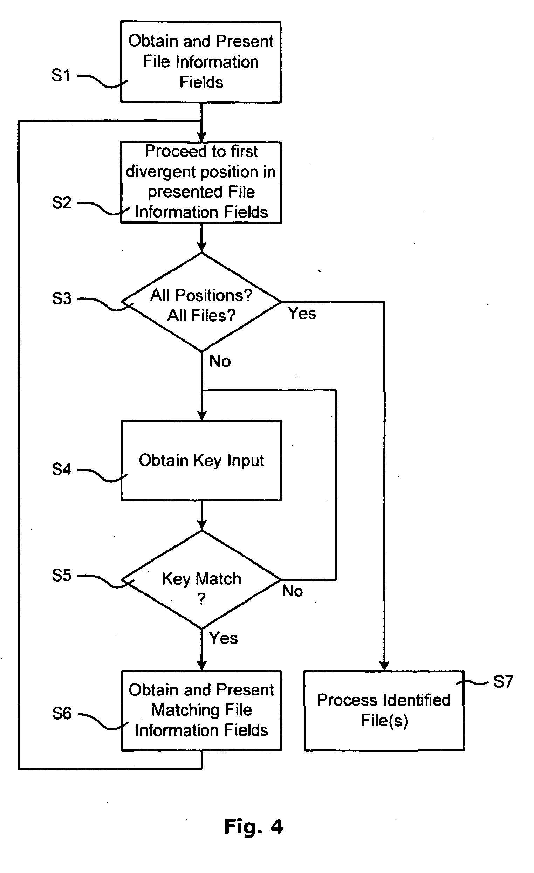

The attention is now directed to the function of an exemplifying embodiment of the invention, which will be described with reference to the previously described fig. 1-3 together with fig. 4 showing a flow chart of a preferred embodiment of a method according to the invention.

The cellular phone 10 according to an embodiment of the present invention is preferably adapted to take pictures and to record short movie shots by means of the camera 24. Similarly, the cellular phone 10 is preferably adapted to record voice conversations and other sounds by means of the microphone 20. The resulting image-files and audio-files are preferably stored in the memory 43 by means of the file handling unit 40 or in any other suitable memory arranged in the phone 10. In addition, the files are preferably provided with file-information-fields comprising the date on which the files were created or similar searchable information. More particularly, the files are provided with the date held by the mobile phone 10 at the time when the files were created. These functions, which *e.g*. can be found in the Sony Ericsson cellular phone model K700i and others, are well known to those skilled in the art of cellular mobile phones.

As is realized by the observant reader, the image-files and audio-files provided with the date on which they were created are typical examples of searchable data files or data products. As an example it can be mentioned that the Exchangeable Image File Format (EXIF) is used by most cameras. The EXIF is an image file format used for digital cameras, which format was created by the Japanese Electronic Industry Development Association (JEIDA). Likewise, ITPC or IIS is commonly used by many computer programs for tagging. Also XMP is a well know format for tagging images. It is also realized by the observant reader having the benefit of this disclosure that the file-information fields can contain creation date and/or other information such as GPS location, modified date, album information, tagging information etc. When entering a date tags, creation date or anything else that is relevant to the user. Also the search fields may be customizable.

The steps in an exemplifying method of searching for such searchable data products in a portable device will now be described with reference to the exemplifying flow chart in Fig. 4. The method is preferably implemented by means of the search handling unit 42 utilizing the file handling unit 42.

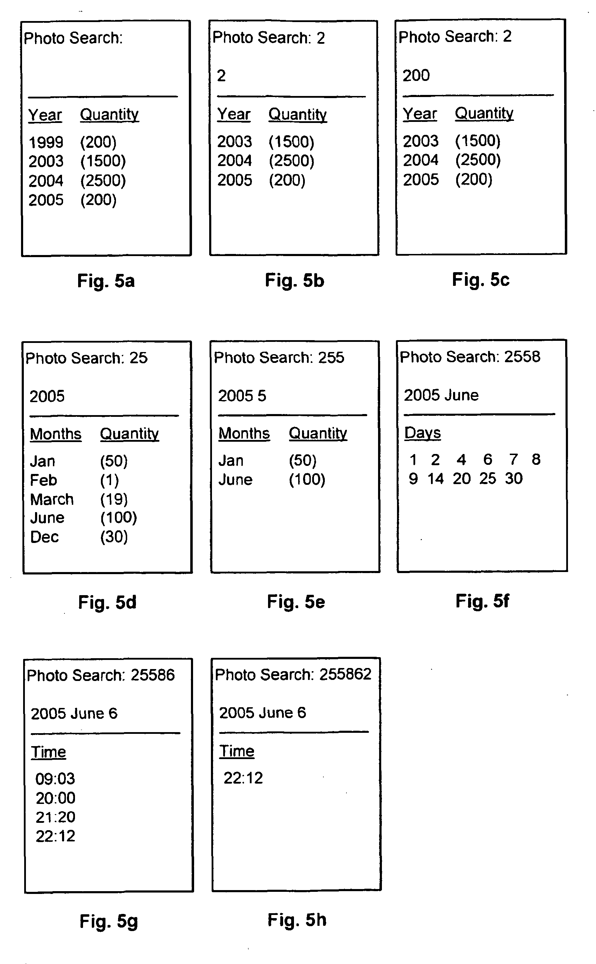

In a first step S1 of an exemplifying method according to an embodiment of the present invention the file-information-fields are obtained for the image-files stored in the memory 43. Preferably, the file-information-field comprises the date and possibly also the time when the image-files were created. The obtained file-information-fields are presented to the user by means of the display 12 or in any other suitable manner. It is preferred that a suitable part of the obtained file-information-fields is presented to the user or that only a suitable part of the file-information-fields is obtained. A presentation of a suitable part of the file-information-fields is schematically illustrated in Fig. 5a showing an example wherein the number of photos taken during the years 1999, 2003, 2004 and 2005 are displayed. The years 1999, 2003, 2004 and 2005 represents a part of the file-information-fields obtained in step S1 and as can be seen each such part comprises four positions. Other parts of the file-information-fields may *e.g*. comprise the month, the day and the time when the image-file was created.

In a second step S2 of the exemplifying method a pointer or similar is placed at the first divergent position in the obtained and presented file-information-fields. The "first divergent position" is the first position in which the file-information-fields comprise diverging information. In the example illustrated in Fig. 5a the first divergent position is actually the first position in the presented file-information-fields, since 1999 begins with the symbol "1" and 2003-2005 begins with the symbol "2". Therefore, in this case the pointer or similar is placed in the first position of the obtained and presented file-information-fields.

Before we proceed it should be emphasised that the described method is an exemplifying embodiment. How the user inputs dates and similar depends on the language settings of the phone 10 etc. For example, China, USA and Europe use different protocols for inputting dates. This could be customizable. In addition, the invention is not limited to files stored in the memory 43 of the phone 10. On the contrary, the method of searching for searchable data products may also include an iterative query *e.g*. sent for each key press to a database or similar storage device connected to the Internet. This allows for searching in even larger databases.

In a third step S3 it is checked whether all positions in the presented file-information-fields have been stepped through, *i.e.* whether the pointer has been positioned at the last position or possibly passed the last position in the presented file-information-fields. In addition or possibly as an alternative it can be checked whether there is only one single file left. In both cases, *i.e*. if all positions in the relevant file-information-fields have been stepped through and/or if the obtained and presented file-information-field correspond to a single file, it may be concluded that the search has come to an end. The remaining file or files can then be adequately processed as illustrated by step S7 in Fig. 4. An adequate processing may *e.g.* be the display of the image comprised by an identified image-file or sounding the sound comprised by an identified audio-file etc. However, if all positions in the relevant file-information-fields have not been stepped through and if the obtained file-information-fields correspond to several files, the method may proceed to the next step.

In a fourth step S4 a keystroke from a user of the phone 10 is obtained from the keypad 22. This step may be perceived as a "waiting step", *i.e.* nothing happens until the user pushes a key on the keypad 22. This and other unwanted or unexpected situations should probably be taken care of. Additional functionality may therefore be incorporated into the fourth step S4 or into the method as a whole, *e.g.* so as to allow a termination of the current step or allowing the execution of other functions after a certain period of inactivity or as a consequence of pushing a certain exit-button or a certain function-button etc. However, this is not a part of the present invention.

In a fifth step S5 the symbol or symbols represented by the key pressed by a user of the phone 10 is compared to the symbols comprised by the specific position in the file-information-fields on which the pointer is currently placed. If there is no match, the method will return to step four S4 to obtain a new keystroke from the user. However, if there is at least one match, the method will proceed.

In a sixth step S6 the file-information-fields of the files having a matching content will be obtained and presented. In other words, the file-information-fields that will be obtained and presented are those that have a symbol in the position pointed out by the pointer that matches a symbol represented by the key pressed by the user. For example, in Fig. 5b the user of the phone 10 has pressed the key representing the symbols "2, A, B, C" to select among the years presented in Fig. 5a. According to the method now discussed this will result in the obtaining and presentation of the years 2003, 2004 and 2005 beginning with the symbol "2", whereas the year 1999 beginning with the symbol "1" is omitted. The method will then again proceed to the second step S2 of the exemplifying method now discussed.

The exemplifying method schematically illustrated by the flowchart in Fig. 4 will now be further elucidated by presenting an exemplifying search for a certain image-file among the image-files retrieved in the first step S1 mentioned above.

As previously explained, in the second step S2 a pointer or similar is placed at the first divergent position in the currently obtained and presented file-information-fields. In the example illustrated in Fig. 5b and Fig. 5c the first divergent position is the last position in the presented file-information-fields, since 2003-2005 ends with number or symbols "3", "4" and "5" respectively. Therefore, in this case the pointer or similar is placed in the last position of the currently presented file-information-fields. The two proceeding symbols "0" in the presented file-information-fields 2003, 2004 and 2005 are preferably automatically provided, since the user is bound to key in these symbols if he wishes to proceed. This is illustrated in Fig. 5c by the symbols "200" presented just above the word "year".

In Fig. 5d the user of the phone 10 has pressed an additional key representing the symbols "5, J, K, L". This corresponds to a selection of the year 2005 having the symbol "5" in the position currently pointed out by the pointer is presented, whereas the years 2003 and 2004 with the symbols "3" and "4" respectively in said position are rejected. As can be seen in Fig. 5d, further information comprised by the file-information-fields is now obtained and presented by the exemplifying method now discussed. This information correspond to the months of 2005 during which photos were taken, *i.e.* January, February, March, June and December, and the number of photos taken each of these months. Naturally, this information may be presented from the beginning in Fig. 5a, provided that the display in question so permits and that this is suitable considering the intended use of the search method etc.

As can be seen in Fig. 5e the user of the phone 10 has again pressed the key representing the symbols "5, J, K, L". According to the exemplifying method now discussed this result in an obtaining and presentation of the months January and June having the symbol "J" in the position currently pointed out by the pointer, whereas the other months are omitted.

In Fig. 5f the user of the phone 10 has pressed the key representing the symbols "8, T, U, V". This corresponds to a selection of the month June having the symbol "U" in the position currently pointed out by the pointer. Again, as can be seen in Fig. 5f, further information comprised by the file-information-fields is obtained and presented by the exemplifying method now discussed. This information comprises the days in June 2005 during which photos were taken, *i.e.* the days 1, 2, 4, 6, 7, 8, 9, 14, 20, 25 and 30.

In Fig. 5g the user of the phone 10 has pressed the key representing the symbols "6, M, N, O". This corresponds to a selection of the 6^{th} day of June 2005. Again, as can be seen in Fig. 5g, further information comprised by the fite-information-fields is presented by the exemplifying method now discussed. This information comprises the points of time during the 6^{th} day of June 2005 when photos were taken, *i.e.* 09:03, 20:00, 21:20 and 22:12.

In Fig. 5h the user of the phone 10 has pressed the key representing the symbols "2, A, B, C". This corresponds to a selection of the time 22:12. According to the exemplifying method now discussed this result in an obtaining and presentation of the time 22:12 having the symbol "2" in the position currently pointed out by the pointer, starting from the right and proceeding to the left as will be explained shortly, whereas the other points in time are omitted. Since the obtained and presented file-information-field comprises a single point in time (*i.e.* 22:12) this correspond to a single image-file. It may therefore be concluded that the search has come to an end. The image-file can then be adequately processed as illustrated by step S7 in Fig. 4. An adequate processing may *e.g.* be the display of the image comprised by the image-file obtained, presented and identified.

Here, it should be explained that the point in time (*i.e.* 22:12) is selected by letting the above mentioned pointer start from the rightmost position so as to proceed to the left in the obtained and presented file-information-fields. This is in contrast to the above supposing that the pointer starts from the leftmost position so as to proceed to the right in the obtained and presented file-information-fields.

In fact it may be preferred to change the direction of proceeding depending on the on the number of different symbols found in the first diverging position when proceeding from the left or from the right in the presented file-information-fields. For example in Fig. 5g two different symbols (*e.g.* the symbols 0 and 2) are found in the in the first diverging position when proceeding from the left, whereas three different symbols (*e.g*. the symbols 0, 2, 3) are found in the in the first diverging position when proceeding from the left. It may then be preferred to proceed from the right. This has the potential of omitting a larger number of the presented file-information-fields, since it may be assumed that the symbols represented by a key pressed by a user in step five S5 as describe above will match a smaller number of the presented file-information-fields.

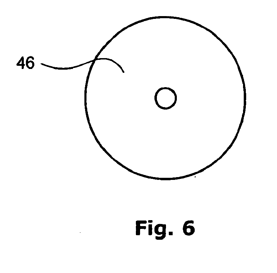

In general, as previously explained, it is preferred that the search handling unit 42, arranged to perform the exemplifying method described above, is provided in the form of one or more processors with corresponding memory containing the appropriate software in the form of a program code. However, the program code can also be provided on a data carrier such as a CD ROM disc 46 as depicted in fig. 6 or an insertable memory stick, which will perform the invention when loaded into a computer or into a phone having suitable processing capabilities. The program code can also be downloaded remotely from a server either outside or inside the cellular network or be downloaded via a computer like a PC to which the phone is temporarily connected.

The present invention has now been described with reference to exemplifying embodiments. However, the invention is not limited to the embodiments described herein. On the contrary, the full extent of the invention is only determined by the scope of the appended claims.

## Claims

1. A method of searching for at least one data file in a portable device (10), which portable device (10) is provided with:
access to a memory arrangement (33, 43) comprising a plurality of data files, each being provided with a file-information-field having a plurality of symbols;
a key arrangement (22) comprising a plurality of keys each representing at least one symbol;
a presentation arrangement (12) for presenting results; and
a search handling unit (42) for performing the method,
which method comprises the step of:
- retrieving and presenting at least a part of said file-information-fields in said plurality of data files; and
the further steps of:
- proceeding to the first diverging position in the presented part of the file-information-fields;
- obtaining a key input;
- comparing the symbol or symbols represented by the key input and the symbol in said diverging position of said file-information-fields;
- presenting at least a part of the file-information-fields having a symbol that matches a symbol represented by the key input; and
- repeating said further steps until all positions in the presented file-information-fields have been stepped through or until the presented file-information-field correspond to a single file.

2. The method in claim 1 wherein said data file is at least one of: an image-file or an audio-file.

3. The method in claim 1 or 2 wherein said searching for said at least one data file is performed in a plurality of data files each provided with a file-information-field that at least comprises the date on which the data file was created.

4. The method in claim 1 wherein said key input correspond to a plurality of different symbols, each being at least one of: a numeral or a letter.

5. The method in claim 1 wherein said first diverging position in the presented part of the file-information-fields is the first position in which the presented part of the file-information-fields comprises different information.

6. The method in claim 1 wherein said proceeding to the first diverging position in the presented part of the file-information-fields is either performed from left to right or from right to left in the presented part of the file-information-fields, depending on the number of different symbols found in the first diverging position when proceeding from the left or from the right in the presented file-information-fields.

7. The method in claim 1 comprising the further step of processing the file or files identified, when all positions in the presented file-information-fields have been stepped through or when the presented file-information-field correspond to a single file.

8. The method in claim 7 wherein said processing is a displaying of an image comprised by an identified image-file or a sounding of a sound comprised by an identified audio-file.

9. The method in claim 1 wherein the retrieving of said file-information-fields is performed by accessing a memory arrangement (43) arranged in the portable device (10).

10. The method in claim 1 wherein the retrieving of said file-information-fields is performed by accessing a memory arrangement (33) connected to a network (30).

11. The method in any proceeding claim wherein said portable device is a phone (10).

12. A portable device (10) provided with:
access to a memory arrangement (33, 43) comprising a plurality of data files,
each being provided with a file-information-field comprising a plurality of symbols;
a key arrangement (22) comprising a plurality of keys each representing at least one symbol;
a presentation arrangement (12) for operatively presenting results; and
a search handling unit (42) for operatively retrieving and presenting at least a part of said file-information-fields in said plurality of data files, and for operatively searching for at least one data file in said plurality of data files by operatively perform the steps of;
- proceeding to the first diverging position in the presented part of the file-information-fields;
- obtaining a key input;
- comparing the symbol or symbols represented by the key input and the symbol in said diverging position of said file-information-fields;
- presenting at least a part of the file-information-fields having a symbol that matches a symbol represented by the key input; and
- repeating the further steps until all positions in the presented file-information-fields have been stepped through or until the presented file-information-field correspond to a single file.

13. The portable device (10) in claim 12 wherein said data file is at least one of: an image-file or an audio-file.

14. The portable device (10) in claim 12 or 13 wherein said plurality of data files each is provided with a file-information-field that at least comprises the date on which the data file was created.

15. The portable device (10) in claim 12 wherein said key input correspond to a plurality of different symbols, each being at least one of: a numeral or a letter.

16. The portable device (10) in claim 12 wherein said first diverging position in the presented part of the file-information-fields is the first position in which the presented part of the file-information-fields comprises different information.

17. The portable device (10) in claim 12 wherein said search handling unit (42) arranged to operatively perform said proceeding to the first diverging position in the presented part of the file-information-fields either from left to right or from right to left in the presented part of the file-information-fields, depending on the number of different symbols found in the first diverging position when proceeding from the left or from the right in the presented file-information-fields.

18. The portable device (10) in claim 12 wherein said search handling unit (42) is arranged to operatively initiate a processing of the file or files identified; when all positions in the presented file-information-fields have been stepped through or when the presented file-information-field correspond to a single file.

19. The portable device (10) in claim 18 wherein said search handling unit (42) is arranged to operatively initiate a processing comprising a displaying of an image comprised by an identified image-file or comprising a sounding of a sound comprised by an identified audio-file.

20. The portable device (10) in claim 12 wherein the retrieving of said file-information-fields is performed by accessing a memory arrangement (43) arranged in the portable device (10).

21. The portable device (10) in claim 12 wherein the retrieving of said file-information-fields is performed by accessing a memory arrangement (33) connected to a network (30).

22. The portable device (10) in claim 12-21 wherein said portable device is a phone (10).

23. A program product (46) comprising a computer readable medium, having thereon: computer program code means, to make a portable device (10) execute; when said program is loaded in a portable device (10) having access to a memory arrangement (33, 43) comprising a plurality of data files, each being provided with a file-information-field comprising a plurality of symbols; a key arrangement (22) comprising a plurality of keys each representing at least one symbol; a presentation arrangement (12) for presenting results;
the step of:
- presenting at least a part of said file-information-fields in said plurality of data files to said user; and
and the further steps of:
- proceeding to the first diverging position in the presented part of the file-information-fields;
- obtaining of a key input;
- comparing of the symbol or symbols represented by the key input and the symbol in said diverging position of said file-information-fields;
- presentation at least a part of the file-information-fields having a symbol that matches a symbol represented by the key input; and
- repeating the further steps until all positions in the presented file-information-fields have been stepped through or until the presented file-information-field correspond to a single file.

24. A computer program element comprising:
computer program code means to make a portable device (10) execute; when said program element is loaded in the portable device having access to a memory arrangement (33, 43) comprising a plurality of data files, each being provided with a file-information-field comprising a plurality of symbols; a key arrangement (22) comprising a plurality of keys each representing at least one symbol; a presentation arrangement (12) for presenting results;
the step of:
- presenting least a part of the file-information-fields in said plurality of data files; and
and the further steps of:
- proceeding to the first diverging position in the presented part of the file-information-fields;
- obtaining a key input;
- comparing the symbol or symbols represented by the key input and the symbol in said diverging position of said file-information-fields;
- presenting at least a part of the file-information-fields having a symbol that matches a symbol represented by the key input; and
- repeating the further steps until all positions in the presented file-information-fields have been stepped through or until the presented file-information-field correspond to a single file.

## Patentansprüche

1. Verfahren zum Suchen nach mindestens einer Datendatei in einer tragbaren Vorrichtung (10), wobei die tragbare Vorrichtung (10) versehen ist mit:
einem Zugriff zu einer Speicheranordnung (33, 43), welche mehrere Datendateien umfasst, die jeweils mit einem Dateiinformationsfeld versehen sind, welches mehrere Symbole aufweist;
einer Schlüsselanordnung (22), welche mehrere Schlüssel umfasst, die jeweils mindestens ein Symbol repräsentieren;
einer Darstellungsanordnung (12), um Ergebnisse darzustellen; und
einer Suchbearbeitungseinheit (42), um das Verfahren durchzuführen,
wobei das Verfahren folgenden Schritt umfasst:
- Heraussuchen und Darstellen zumindest eines Teils der Dateiinformationsfelder in den mehreren Datendateien;
und weitere Schritte umfasst:
- Fortschreiten zu der ersten abweichenden Stelle in dem dargestellten Teil der Dateiinformationsfelder;
- Erfassen einer Schlüsseleingabe;
- Vergleichen des Symbols oder der Symbole, welche durch die Schlüsseleingabe repräsentiert werden, und des Symbols an der abweichenden Stelle der Dateiinformationsfelder;
- Darstellen zumindest eines Teils der Dateiinformationsfelder, welcher ein Symbol aufweist, welches mit einem Symbol übereinstimmt, dass durch die Schlüsseleingabe repräsentiert wird; und
- Wiederholen der weiteren Schritte bis alle Stellen in den dargestellten Dateiinformationsfeldern durchschritten worden sind oder bis das dargestellte Dateiinformationsfeld einer einzigen Datei entspricht.

2. Verfahren nach Anspruch 1, **dadurch gekennzeichnet, dass** die Datendatei eine Bilddatei oder eine Audiodatei ist.

3. Verfahren nach Anspruch 1 oder 2, **dadurch gekennzeichnet, dass** das Suchen nach der mindestens einen Datendatei in mehreren Datendateien durchgeführt wird, welche jeweils mit einem Dateninformationsfeld versehen sind, welches zumindest das Datum umfasst, wann die Datendatei erzeugt wurde.

4. Verfahren nach Anspruch 1, **dadurch gekennzeichnet, dass** die Schlüsseleingabe mehreren unterschiedlichen Symbolen entspricht, welche jeweils eine Ziffer oder ein Buchstabe sind.

5. Verfahren nach Anspruch 1, **dadurch gekennzeichnet, dass** die erste abweichende Stelle in dem dargestellten Teil der Dateiinformationsfelder die erste Stelle ist, an welcher der dargestellte Teil der Dateiinformationsfelder unterschiedliche Informationen umfasst.

6. Verfahren nach Anspruch 1, **dadurch gekennzeichnet, dass** das Fortschreiten zu der ersten abweichenden Stelle in dem dargestellten Teil der Dateiinformationsfelder entweder von links nach rechts oder von rechts nach links in dem dargestellten Teil der Dateiinformationsfelder durchgeführt wird, abhängig von der Anzahl verschiedener Symbole, welche an der ersten abweichenden Stelle gefunden werden, wenn von links oder von rechts in den dargestellten Dateiinformationsfeldern fortgeschritten wird.

7. Verfahren nach Anspruch 1, den weiteren Schritt eines Verarbeitens der identifizierten Datei oder Dateien umfassend, wenn alle Stellen in den dargestellten Dateiinformationsfeldern durchschritten worden sind oder wenn das dargestellte Dateiinformationsfeld einer einzigen Datei entspricht.

8. Verfahren nach Anspruch 7, **dadurch gekennzeichnet, dass** das Verarbeiten ein Darstellen eines Bildes, welches in einer identifizierten Bilddatei enthalten ist, oder ein Ausgeben eines Geräuschs, welches in einer identifizierten Audiodatei enthalten ist, ist.

9. Verfahren nach Anspruch 1, **dadurch gekennzeichnet, dass** das Heraussuchen der Dateiinformationsfelder durchgeführt wird, indem auf eine Speicheranordnung (43), welche in der tragbaren Vorrichtung (10) angeordnet ist, zugegriffen wird.

10. Verfahren nach Anspruch 1, **dadurch gekennzeichnet, dass** das Heraussuchen der Dateiinformationsfelder durchgeführt wird, indem auf eine Speicheranordnung (33), welche mit einem Netz (30) verbunden ist, zugegriffen wird.

11. Verfahren nach einem der vorhergehenden Ansprüche, **dadurch gekennzeichnet, dass** die tragbare Vorrichtung ein Telefon (10) ist.

12. Tragbare Vorrichtung (10), welche versehen ist mit:
einem Zugriff zu einer Speicheranordnung (33, 43), welche mehrere Datendateien umfasst, die jeweils mit einem Dateninformationsfeld versehen sind, welches mehrere Symbole aufweist;
einer Schlüsselanordnung (22), welche mehrere Schlüssel umfasst, die jeweils mindestens ein Symbol repräsentieren;
einer Darstellungsanordnung (12), um betriebsbereit Ergebnisse darzustellen; und
einer Suchbearbeitungseinheit (42), um betriebsbereit mindestens einen Teil der Dateninformationsfelder in den mehreren Datendateien herauszusuchen und darzustellen und um mindestens eine Datendatei in den mehreren Datendateien betriebsbereit zu suchen, indem betriebsbereit folgende Schritte durchgeführt werden;
- Fortschreiten zu der ersten abweichenden Stelle in dem dargestellten Teil der Dateiinformationsfelder;
- Erfassen einer Schlüsseleingabe;
- Vergleichen des Symbols oder der Symbole, welche durch die Schlüsseleingabe repräsentiert werden, und des Symbols an der abweichenden Stelle der Dateiinformationsfelder;
- Darstellen zumindest eines Teils der Dateiinformationsfelder, welcher ein Symbol aufweist, welches mit einem Symbol übereinstimmt, das durch die Schlüsseleingabe repräsentiert wird; und
- Wiederholen der Schritte bis alle Stellen in den dargestellten Dateiinformationsfeldern durchschritten worden sind oder bis das dargestellte Dateiinformationsfeld einer einzigen Datei entspricht.

13. Tragbare Vorrichtung (10) nach Anspruch 12, **dadurch gekennzeichnet, dass** die Datendatei eine Bilddatei oder eine Audiodatei ist.

14. Tragbare Vorrichtung (10) nach Anspruch 12 oder 13, **dadurch gekennzeichnet, dass** die mehreren Datendateien jeweils mit einem Dateiinformationsfeld versehen sind, welches zumindest das Datum umfasst, an welchem die Datendatei erzeugt wurde.

15. Tragbare Vorrichtung (10) nach Anspruch 12, **dadurch gekennzeichnet, dass** die Schlüsseleingabe mehreren unterschiedlichen Symbolen entspricht, welche jeweils eine Ziffer oder ein Buchstabe sind.

16. Tragbare Vorrichtung (10) nach Anspruch 12, **dadurch gekennzeichnet, dass** die erste abweichende Stelle in dem dargestellten Teil der Dateiinformationsfelder die erste Stelle ist, an welcher der dargestellte Teil der Dateiinformationsfelder unterschiedliche Informationen umfasst.

17. Tragbare Vorrichtung (10) nach Anspruch 12, **dadurch gekennzeichnet, dass** die Suchbearbeitungseinheit (42) ausgestaltet ist, um betriebsbereit das Fortschreiten zu der ersten abweichenden Stelle in dem dargestellten Teil der Dateiinformationsfelder entweder von links nach rechts oder von rechts nach links in dem dargestellten Teil der Dateiinformationsfelder abhängig von der Anzahl verschiedener Symbole, welche an der ersten abweichenden Stelle gefunden werden, wenn in den dargestellten Dateiinformationsfeldern von links oder von rechts fortgeschritten wird, durchzuführen.

18. Tragbare Vorrichtung (10) nach Anspruch 12, **dadurch gekennzeichnet, dass** die Suchbearbeitungseinheit (42) ausgestaltet ist, um betriebsbereit ein Verarbeiten der identifizierten Datei oder Dateien zu veranlassen, wenn alle Stellen in den dargestellten Dateiinformationsfeldern durchschritten worden sind oder wenn das dargestellte Dateiinformationsfeld einer einzigen Datei entspricht.

19. Tragbare Vorrichtung (10) nach Anspruch 18, **dadurch gekennzeichnet, dass** die Suchbearbeitungseinheit (42) ausgestaltet ist, um betriebsbereit ein Verarbeiten zu veranlassen, welches ein Darstellen eines Bildes, das in einer identifizierten Bilddatei enthalten ist, oder ein Ausgeben eines Geräuschs, welches in einer identifizierten Audiodatei enthalten ist, umfasst.

20. Tragbare Vorrichtung (10) nach Anspruch 12, **dadurch gekennzeichnet, dass** das Heraussuchen der Dateiinformationsfelder ausgeführt wird, indem auf eine Speicheranordnung (43), welche in der tragbaren Vorrichtung (10) angeordnet ist, zugegriffen wird.

21. Tragbare Vorrichtung (10) nach Anspruch 12, **dadurch gekennzeichnet, dass** das Heraussuchen der Dateiinformationsfelder durchgeführt wird, indem auf eine Speicheranordnung (33), welche mit einem Netz (30) verbunden ist, zugegriffen wird.

22. Tragbare Vorrichtung (10) nach einem der Ansprüche 12-21, **dadurch gekennzeichnet, dass** die tragbare Vorrichtung ein Telefon (10) ist.

23. Programmprodukt (46), welches ein von einem Computer lesbares Medium umfasst, das darauf aufweist: Computerprogrammcodemittel, um sie auf einer tragbaren Vorrichtung (10) auszuführen, wenn das Programm in eine tragbare Vorrichtung (10) geladen wird, welche aufweist einen Zugriff zu einer Speicheranordnung (33, 43), welche mehrere Datendateien umfasst, die jeweils mit einem Dateiinformationsfeld versehen sind, welches mehrere Symbole umfasst; eine Schlüsselanordnung (22), welche mehrere Schlüssel umfasst, die jeweils mindestens ein Symbol repräsentieren; eine Darstellungsanordnung (12), um Ergebnisse darzustellen;
mit folgenden Schritten:
- Darstellen zumindest eines Teils der Dateiinformationsfelder in den mehreren Datendateien einem Benutzer; und
mit den weiteren Schritten:
- Fortschreiten zu der ersten abweichenden Stelle in dem dargestellten Teil der Dateiinformationsfelder;
- Erfassen einer Schlüsseleingabe;
- Vergleichen des Symbols oder der Symbole, welche durch die Schlüsseleingabe repräsentiert werden, und des Symbols an der abweichenden Stelle der Dateiinformationsfelder;
- Darstellen zumindest eines Teils der Dateiinformationsfelder, welcher ein Symbol aufweist, welches mit einem Symbol übereinstimmt, das durch die Schlüsseleingabe repräsentiert wird; und
- Wiederholen der weiteren Schritte bis alle Stellen in den dargestellten Dateiinformationsfeldern durchschritten worden sind oder bis das dargestellte Dateiinformationsfeld einer einzigen Datei entspricht.

24. Computerprogrammelement umfassend:
Computerprogrammcodemittel, um sie auf einer tragbaren Vorrichtung (10) auszuführen, wenn das Programmelement in die tragbare Vorrichtung geladen wird, welche aufweist einen Zugriff zu einer Speicheranordnung (33, 43), die mehrere Datendateien umfasst, welche jeweils mit einem Dateiinformationsfeld versehen sind, welches mehrere Symbole umfasst; eine Schlüsselanordnung (22), welche mehrere Schlüssel umfasst, die jeweils mindestens ein Symbol repräsentieren; eine Darstellungsanordnung (12), um Ergebnisse darzustellen;
mit folgenden Schritten:
- Darstellen zumindest eines Teils der Dateiinformationsfelder in den mehreren Datendateien; und
mit den weiteren Schritten:
- Fortschreiten zu der ersten abweichenden Stelle in dem dargestellten Teil der Dateiinformationsfelder;
- Erfassen einer Schlüsseleingabe;
- Vergleichen des Symbols oder der Symbole, welche durch die Schlüsseleingabe repräsentiert werden, und des Symbols an der abweichenden Stelle der Dateiinformationsfelder;
- Darstellen zumindest eines Teils der Dateiinformationsfelder, welcher ein Symbol aufweist, welches mit einem Symbol übereinstimmt, das durch die Schlüsseleingabe repräsentiert wird; und
- Wiederholen der weiteren Schritte bis alle Stellen in den dargestellten Dateiinformationsfeldern durchschritten worden sind oder bis das dargestellte Dateiinformationsfeld einer einzigen Datei entspricht.

## Revendications

1. Procédé de recherche d'au moins un fichier de données dans un dispositif portable (10), lequel dispositif portable (10) est pourvu :
d'un accès à un agencement de mémoire (33, 43) comprenant une pluralité de fichiers de données, chacun étant pourvu d'un champ d'informations de fichier ayant une pluralité de symboles ;
un agencement de touches (22) comprenant une pluralité de touches représentant chacune au moins un symbole ;
un agencement de présentation (12) pour présenter des résultats ; et
une unité de gestion de recherche (42) pour exécuter le procédé,
lequel procédé comprend l'étape qui consiste à :
- extraire et présenter au moins une partie desdits champs d'informations de fichier dans ladite pluralité de fichiers de données ; et
les étapes supplémentaires qui consistent à :
- avancer jusqu'à la première position divergente dans la partie présentée des champs d'informations de fichier ;
- obtenir la saisie d'une touche ;
- comparer le ou les symboles représentés par la saisie de touche au symbole dans ladite position divergente desdits champs d'informations de fichier ;
- présenter au moins une partie des champs d'informations de fichier ayant un symbole qui correspond à un symbole représenté par la saisie de touche ; et
- répéter lesdites étapes supplémentaires jusqu'à ce que toutes les positions dans les champs d'informations de fichier présentés soient passées ou jusqu'à ce que le champ d'informations de fichier présenté corresponde à un fichier unique.

2. Procédé de la revendication 1 dans lequel ledit fichier de données est au moins un d'un fichier image ou d'un fichier audio.

3. Procédé de la revendication 1 ou 2 dans lequel ladite étape de recherche dudit au moins un fichier de données est réalisée dans une pluralité de fichiers de données chacun pourvu d'un champ d'informations de fichier qui comprend au moins la date à laquelle le fichier de données a été généré.

4. Procédé de la revendication 1 dans lequel ladite saisie de touche correspond à une pluralité de symboles différents, chacun étant au moins l'un d'un symbole numérique ou d'un symbole lettre.

5. Procédé de la revendication 1, dans lequel ladite première position divergente dans la partie présentée des champs d'informations de fichier est la première position dans laquelle la partie présentée des champs d'informations de fichier comprend des informations différentes.

6. Procédé de la revendication 1 dans lequel ledit traitement à la première position divergente dans la partie présentée des champs d'informations de fichier est effectuée soit de gauche à droite soit de droite à gauche dans la partie présentée des champs d'informations de fichier, selon le nombre de symboles différents trouvés dans la première position divergente lorsque procédant de gauche ou de droite dans les champs d'informations de fichier.

7. Procédé de la revendication 1 comprenant l'étape supplémentaire de traitement du ou des fichiers identifiés, lorsque toutes les positions dans les champs d'informations de fichier présentés ont été passées ou lorsque le champ d'informations de fichier présenté correspond à un fichier unique.

8. Procédé de la revendication 7 dans lequel ledit traitement est un affichage d'une image composée d'un fichier image identifié ou la résonance d'un son constitué d'un fichier audio identifié.

9. Procédé de la revendication 1, dans lequel l'extraction desdits champs d'informations de fichier est effectuée en accédant à un agencement de mémoire (43) agencé dans le dispositif portable (10).

10. Procédé de la revendication 1 dans lequel l'extraction desdits champs d'informations de fichier est effectuée en accédant à un agencement de mémoire (33) connecté à un réseau (30).

11. Procédé de l'une quelconque des revendications précédentes dans lequel ledit dispositif portable est un téléphone (10).

12. Dispositif portable (10) pourvu :
d'un accès à un agencement de mémoire (33, 43) comprenant une pluralité de fichiers de données, chacun étant pourvu d'un champ d'informations de fichier comprenant une pluralité de symboles ;
un agencement de touches (22) comprenant une pluralité de touches représentant chacune au moins un symbole ;
un agencement de présentation (12) pour présenter des résultats de manière opérationnelle ; et
une unité de gestion de recherche (42) pour extraire et présenter de manière opérationnelle au moins une partie desdits champs d'informations de fichier dans ladite pluralité de fichiers de données, et pour chercher de manière opérationnelle au moins un fichier de données dans ladite pluralité de fichiers de données en effectuant opérationnellement les étapes qui consistent à :
- avancer jusqu'à la première position divergente dans la partie présentée des champs d'informations de fichier ;
- obtenir la saisie d'une touche ;
- comparer le ou les symboles représentés par la saisie de touche au symbole dans ladite position divergente desdits champs d'informations de fichier ;
- présenter au moins une partie des champs d'informations de fichier ayant un symbole qui correspond à un symbole représenté par la saisie de touche ; et
- répéter les étapes supplémentaires jusqu'à ce que toutes les positions dans les champs d'informations de fichier présentés soient passées ou jusqu'à ce que le champ d'informations de fichier corresponde à un fichier unique.

13. Dispositif portable (10) de la revendication 12 dans lequel ledit fichier de données est au moins l'un d'un fichier image ou d'un fichier audio.

14. Dispositif portable (10) de la revendication 12 ou 13 dans lequel chacun de ladite pluralité de fichiers de données est pourvu d'un champ d'informations de fichier qui comprend au moins la date à laquelle le fichier de données a été généré.

15. Dispositif portable (10) de la revendication 12 dans lequel ladite saisie de touche correspond à une pluralité de symboles différents, chacun étant au moins l'un d'un symbole numérique ou d'un symbole lettre.

16. Dispositif portable (10) de la revendication 12 dans lequel ladite première position divergente dans la partie présentée des champs d'informations de fichier est la première position dans laquelle la partie présentée des champs d'informations de fichier comporte des informations différentes.

17. Dispositif portable (10) de la revendication 12 dans lequel ladite unité de gestion de recherche (42) est agencée pour effectuer de manière opérationnelle ledit traitement à la première position divergente dans la partie présentée des champs d'informations de fichier soit de gauche à droite soit de droite à gauche dans la partie présentée des champs d'informations de fichier, selon le nombre de symboles différents trouvés dans la première position divergente lorsque procédant de gauche ou de droite dans les champs d'informations de fichier présentés.

18. Dispositif portable (10) de la revendication 12 dans lequel ladite unité de gestion de recherche (42) est agencée pour initier de manière opérationnelle un traitement du ou des fichiers identifiés ; lorsque toutes les positions dans les champs d'informations de fichier présentés ont été passées ou lorsque le champ d'informations de fichier correspond à un fichier unique.

19. Dispositif portable (10) de la revendication 18 dans lequel ladite unité de gestion de recherche (42) est agencée pour initier de manière opérationnelle un traitement comprenant l'affichage d'une image composée d'un fichier image identifié ou comprenant la résonance d'un son constitué d'un fichier audio identifié.

20. Dispositif portable (10) de la revendication 12 où l'extraction desdits champs d'informations de fichier est effectuée en accédant à un agencement de mémoire (43) agencé dans le dispositif portable (10).

21. Dispositif portable (10) de la revendication 12 où l'extraction desdits champs d'informations de fichier est effectuée en accédant à un agencement de mémoire (33) connecté à un réseau (30).

22. Dispositif portable (10) de la revendication 12 à 21 dans lequel ledit dispositif portable est un téléphone (10).

23. Produit de programme (46) comprenant un support lisible par ordinateur, ayant dessus : un moyen de codage de programme informatique, pour amener un dispositif portable (10) à exécuter ; lorsque ledit programme est chargé dans un dispositif portable (10) ayant accès à un agencement de mémoire (33, 43) comprenant une pluralité de fichiers de données, chacun étant pourvu d'un champ d'informations de fichier comprenant une pluralité de symboles ; un agencement de touches (22) comprenant une pluralité de touches représentant chacune au moins un symbole, un agencement de présentation (12) pour présenter des résultats ;
l'étape qui consiste à :
- présenter au moins une partie desdits champs d'informations de fichier dans ladite pluralité de fichiers de données audit utilisateur ; et
les étapes supplémentaires qui consistent à :
- avancer jusqu'à la première position divergente dans la partie présentée des champs d'informations de fichier ;
- obtenir la saisie d'une touche ;
- comparer le ou les symboles représentés par la saisie de touche au symbole dans ladite position divergente desdits champs d'informations de fichier ;
- présenter au moins une partie des champs d'informations de fichier ayant un symbole qui correspond à un symbole représenté par la saisie de touche ; et
- répéter les étapes supplémentaires jusqu'à ce que toutes les positions dans les champs d'informations de fichier présentés soient passées ou jusqu'à ce que le champ d'informations de fichier corresponde à un fichier unique.

24. Elément de programme informatique comportant :
un moyen de codage de programme informatique pour amener un dispositif portable (10) à exécuter ; lorsque ledit élément de programme est chargé dans le dispositif portable (10) ayant accès à un agencement de mémoire (33, 43) comprenant une pluralité de fichiers de données, chacun étant pourvu d'un champ d'informations de fichier comprenant une pluralité de symboles ; un agencement de touches (22) comprenant une pluralité de touches représentant chacune au moins un symbole ; un agencement de présentation (12) pour présenter des résultats ;
l'étape qui consiste à :
- présenter au moins une partie des champs d'informations de fichier dans ladite pluralité de fichiers de données ; et
les étapes supplémentaires qui consistent à :
- avancer jusqu'à la première position divergente dans la partie présentée des champs d'informations de fichier ;
- obtenir la saisie d'une touche ;
- comparer le ou les symboles représentés par la saisie de touche au symbole dans ladite position divergente desdits champs d'informations de fichier ;
- présenter au moins une partie des champs d'informations de fichier ayant un symbole qui correspond à un symbole représenté par la saisie de touche ; et
- répéter les étapes supplémentaires jusqu'à ce que toutes les positions dans les champs d'informations de fichier présentés soient passées ou jusqu'à ce que le champ d'informations de fichier corresponde à un fichier unique.
